# EUROPÄISCHE PATENTSCHRIFT

(11) **EP 0 697 790 B1**
(45) Veröffentlichungstag und Bekanntmachung des Hinweises auf die Patenterteilung: **10.11.1999**
(21) Anmeldenummer: 95111018.8
(22) Anmeldetag: 13.07.1995
(51) Int. Cl.: H04N 5/45

(54) **Verfahren und Schaltungsanordnung zur Bild-im-Bild-Einblendung**
Method and circuit for a picture in picture insertion
Procédé et circuit d'insertion d'image dans l'image

(30) Priorität: 18.08.1994 DE 4429287
(43) Veröffentlichungstag der Anmeldung: 21.02.1996
(73) Patentinhaber: SIEMENS AKTIENGESELLSCHAFT, 80333 München (DE)
(72) Erfinder: Scheffler, Günter, Dipl.-Ing., D-80939 München (DE)

(56) Entgegenhaltungen:
- EP-A- 0 411 662
- US-A- 4 665 438
- US-A- 4 809 069
- US-A- 5 065 243

## Beschreibung

Die Erfindung betrifft ein Verfahren zur Bild-im-Bild-Einblendung eines einzublendenden Bildes in ein Hauptbild, bei dem ein Halbbildspeicher zur Zwischenspeicherung des einzublendenden Bildes verwendet wird, aus dem mit verdoppelter Zeilenfrequenz ausgelesen wird.

Die Erfindung betrifft außerdem eine Schaltungsanordnung zur Durchführung des Verfahrens.

Ein solches Verfahren kann in Geräten zur Videosignalverarbeitung, z. B. Fernsehgeräten angewandt werden, bei denen eine Flimmerbefreiung der am Bildschirm darzustellenden Bilder durch eine Verdopplung der Wiedergabezeilenfrequenz erreicht wird.

Ein Verfahren zur Bild-im-Bild-Einblendung wird vom integrierten Schaltkreis SDA 9088 der Firma Siemens ausgeführt. Das einzublendende Bild wird in einem Speicher zwischengespeichert, der nur die Speicherkapazität eines Halbbildes aufweist. Bei beliebigen Phasenlagen von Hauptbild und einzublendendem Bild kann es beim Auslesen mit der doppelten Zeilenfrequenz vorkommen, daß der Auslesevorgang den Einschreibvorgang am Halbbildspeicher überholt. Im einzublendenden Bild werden dann Bildanteile von zwei aufeinanderfolgenden Bewegungsphasen dargestellt. Die Linie, an der der Bewegungssprung sichtbar ist, wird als Jointline bezeichnet. Von den im Fernsehgerät empfangenen zeilenverkämmten ersten und zweiten Halbbildern des einzublendenden Bildes wird nur jedes zweite Halbbild im Halbbildspeicher des angegebenen integrierten Schaltkreises zwischengespeichert. Zur Einblendung stehen dann nur Halbbilder der gleichen Zeilenrasterlage zur Verfügung. Rastervertauschungen beim Auftreten einer Jointline werden dadurch vermieden. Die vertikale Auflösung des einzublendenden Bildes ist jedoch relativ gering.

In der europäischen Patentanmeldung EP 0 471 878 sind ein Verfahren und eine Schaltungsanordnung zur Durchführung des Verfahrens zur Bild-im-Bild-Einblendung gezeigt, bei denen zwei Halbbildspeicher für das einzublendende Bild verwendet werden. In jedem der Halbbildspeicher werden Halbbilder nur einer Zeilenrasterlage gespeichert. Eine Entscheidungseinrichtung sorgt dafür, daß ausgangsseitig zwischen den Halbbildspeichern derart umgeschaltet wird, daß eine jointlinefreie Einblendung ermöglicht wird. Eine Rasterkorrektureinrichtung sorgt für die rasterrichtige Einblendung des gesamten jointline-freien einzublendenden Halbbilds in das Hauptbild. Die zur Rasterkorrektur auf die kompletten Halbbilder auszuführende Interpolation führt zu einer Verringerung der vertikalen Auflösung. Nachteilig ist außerdem der relativ hohe Schaltungsaufwand durch die Verwendung von zwei Halbbildspeichern.

Die EP 0 411 662 A2 offenbart einen Bild-im-Bild-Fernsehempfänger, bei dem ebenfalls zwei Halbbildspeicher für das einzublendende Bild vorgesehen sind.

In der europäischen Offenlegungsschrift EP-A-0 229 431 ist ein Verfahren zur Bild-im-Bild-Einblendung beschrieben, bei dem ein Halbbildspeicher für nur ein Halbbild verwendet wird. Das Auslesen aus dem Halbbildspeicher erfolgt mit einfacher Zeilenfrequenz. Um eine störungsarme Wiedergabe zu ermöglichen, werden Maßnahmen zur Korrektur von Zeilenverwürfelungen durchgeführt. Die Korrekturmaßnahmen sehen in Abhängigkeit von der relativen Stellung von Schreib- zu Lesezähler des Halbbildspeichers für das einzublendende Bild sowie der Zeilenrasterlage von Hauptbild und einzublendendem Bild eine Veränderung des Auslesezählers um +/- 1 Zeile vor.

Die Aufgabe der Erfindung besteht darin, ein Verfahren zur Bild-im-Bild-Einblendung nach der eingangs genannten Art anzugeben, bei dem ein Speicher für nur ein Halbbild des einzublendenden Bildes erforderlich ist für eine möglichst störungsarme Wiedergabe an einen Bildschirm mit verdoppelter Zeilenfrequenz.

Eine weitere Aufgabe besteht in der Angabe einer Schaltungsanordnung zur Durchführung des Verfahrens.

Erfindungsgemäß wird die Aufgabe betreffend das Verfahren durch die Merkmale des Patentanspruchs 1 gelöst, alternativ durch die Merkmale des Patentanspruchs 2.

Eine Schaltungsanordnung zur Durchführung des Verfahrens ist in Patentanspruch 7 angegeben.

Durch die zeilenweise Anpassung des Bildinhalts des einzublendenden Bildes an die Zeilenrasterlage des Hauptbildes werden Rastervertauschungen bei Vorliegen einer Jointline vermieden. Da beide Halbbilder zur Einblendung verwendet werden, ist die vertikale Auflösung erheblich erhöht.

Das erfindungsgemäße Verfahren kann auf verschiedene übliche Flimmerreduktionsverfahren für das Hauptbild angewandt werden. Dies trifft sowohl auf Aufwärtskonversionsverfahren mit Halbbildverdopplung mit Inter-Field oder Intra-Field-Verarbeitung als auch auf progressive Konversionsverfahren zu.

Es ist zweckmäßig, zur Anpassung des Bildinhalts einer einzublendenden Zeile an die Zeilenrasterlage des Hauptbildes ein Korrektursignal zu erzeugen, in Abhängigkeit von dessen Wert eine Umschaltung zwischen verschiedenen Signalverarbeitungspfaden für eine Rasteranpassung durchgeführt wird. Das Korrektursignal kann durch eine Logikeinrichtung realisiert werden, durch die die Halbbildzugehörigkeit der einzublenden den Zeile und die Rasterlage derjenigen Stelle, an der sie im Hauptbild einzublenden ist, ausgewertet werden. Zur Rasterlagenanpassung kann eine Umschaltung zwischen dem direkten Auslesen aus dem Speicher, einer Verzögerung um eine Zeile oder eine Interpolation aus beispielsweise zwei aufeinanderfolgenden Zeilen durchgeführt werden. Der schaltungstechnische Aufwand ist folglich relativ gering.

Der Aufwand zur Adreßsteuerung des Halbbildspeichers kann verringert bzw. eine Einsparung von Speicheraufwand für eine Bildzeile kann erreicht werden, indem eine einzublendende Halbbildzeile, die einem Halbbild für eine erste (α) Zeilenrasterlage zugeordnet ist, im Großbild in der zweiten Zeilenrasterlage (β) und umgekehrt dargestellt wird. Um im einzublendeten Bild die korrekte Zeilenverkämmung von erstem und zweitem Halbbild zu gewährleisten, muß das erste Halbbild gegenüber dem zweiten Halbbild um eine Zeile nach unten verschoben werden.

Wenn für das Hauptbild eine Zeilenrasterabfolge vorliegt, bei der das gleiche Zeilenraster unmittelbar aufeinanderfolgend verdoppelt dargestellt wird (z. B. ααββ), kann eine Verbesserung der vertikalen Auflösung für solche einzublendenden zeilen erreicht werden, die in den beiden aufeinanderfolgenden Wiedergaberastern in die jeweils andere Rasterlage umzusetzen sind. Anstelle einer Interpolation kann eine unveränderte Wiedergabe der Zeile gegebenenfalls mit einer Verschiebung um eine Zeile nach unten vorgesehen werden. Die geringfügige Beeinträchtigung der Darstellungsqualität durch das Fehlen einer Bildzeile an der Jointlinie ist von einem Betrachter kaum wahrnehmbar.

Je nach verwendeter Art von Halbbildspeicher kann die kleinste im Speicher adressierbare Dateneinheit eine Halbbildzeile, ein Teil einer Halbbildzeile (z. B. eine Zeilenhälfte oder ein Zeilendrittel usw.) oder sogar ein Bildpunkt sein. Das Korrektursignal zur Steuerung der Rasteranpassung des einzublendenden Bildes an das Hauptbild wird dann zweckmäßigerweise synchron mit dem Auslesen einer neuen Zeile, eines neuen Zeilenanteils bzw. eines neuen Bildpunkts aktualisiert. In entsprechender Weise wird das Umschalten zwischen den verschiedenen Vorschriften zur Rasteranpassung mit dem Wechsel des Korrektursignals gegebenenfalls auch innerhalb einer einzublendenen Zeile durchgeführt.

Nachfolgend wird die Erfindung anhand der in der Zeichnung dargestellten Figuren näher erläutert. Es zeigen:
- Figur 1: ein Zeilenindexdiagramm für das Schreiben und Lesen am Halbbildspeicher für das einzublendende Bild und
- Figur 2: eine Schaltungsanordnung zur Durchführung des Verfahrens.

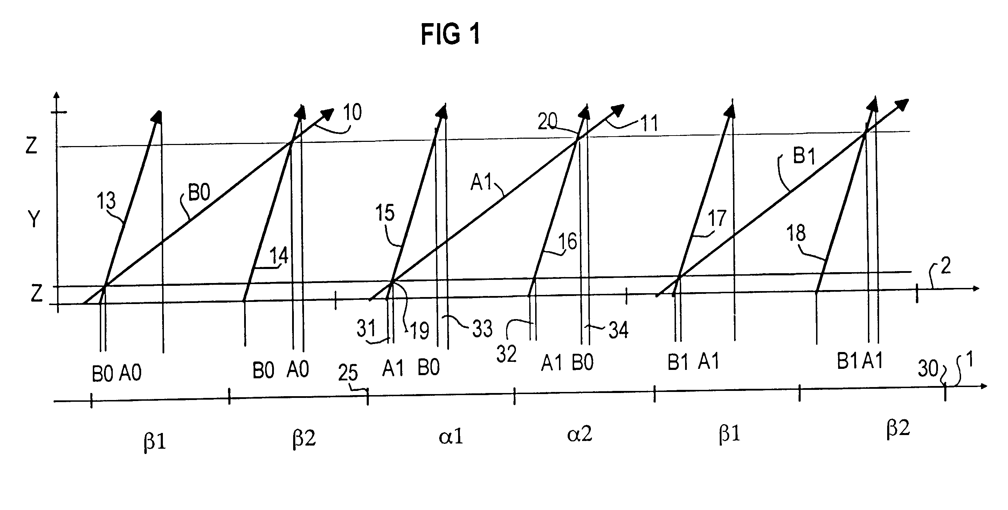

Im Zeilenindexdiagramm gemäß Figur 1 ist beispielhaft gewählte Phasenlage zwischen Hauptbild und einzublendendem Bild dargestellt. Der Zeitstrahl 1 zeigt die Rasterlagenabfolge für das Hauptbild. Es liegt das Wiedergaberaster ααββ vor. Das Wiedergaberaster läuft mit verdoppelter Zeilenfrequenz, z. B. 100Hz, ab. Der Zeitstrahl 2 ist auf die Halbbilder des einzublendenden Bildes bezogen, die in der Folge B0, A1, B1, ... dort eingelesen werden. Längs der vertikalen Achse sind die Schreib- und Leseadressen des Halbbildspeichers abgetragen. Der Zeiger 10 entspricht dem Einlesen des Bildes B0 in den Halbbildspeicher. Es wird vorausgesetzt, daß der Halbbildspeicher bereits vorher mit dem Halbbild A0 beschrieben wurde. Für das einzublendende Bild werden zeilenverkämmte Halbbilder empfangen, also die Halbbildabfolge A0, B0, A1, B1,.... Die Halbbilder A0, A1 umfassen die ungeradzahligen Zeilen eines Vollbildes, die Halbbilder B0, B1 die geradzahligen Zeilen. Außerdem enthält das Raster α die geradzahligen Zeilen, das Raster β die ungeradzahligen Zeilen.

Die mit einfacher Zeilenfrequenz, z. B. 50Hz, eingelesenen Halbbilder des einzublendenden Bildes werden mit verdoppelter Zeilenfrequenz ausgelesen. Jeder Auslesevorgang ist durch einen Zeiger 13...18 dargestellt. Das Auslesen aus dem Halbbildspeicher ist auf den Zeilenrahmen des Hauptbilds synchronisiert. Da das Auslesen der Zeilen aus dem Halbbildspeicher schneller erfolgt als das Einlesen, tritt ein Überschneiden von Einlese- und Auslesezeiger auf. Je nach Phasenlage können Ein- und Auslesezeiger zwei Schnittpunkte 19, 20 bilden. Dies bedeutet, daß beispielsweise für Ausleseadressen des Auslesezeiger 15 unterhalb des Schnittpunkts 19 mit dem Einlesezeiger 11 Bildzeilen des gerade eingeschriebenen Halbbildes A1 ausgelesen werden; für Ausleseadressen oberhalb des Schnittpunkts 19 werden die zum bereits vorher gespeicherten Halbbild B0 gehörenden Zeilen ausgelesen. Am Bildschirm wird entsprechend dem Schnittpunkt 19 eine Jointline festgestellt, wobei im oberen Teil des Bildes die bereits zur neuen Bewegungsphase des Halbbilds A1 gehörende Bildinformation, unterhalb dieser Jointline die Bildinformation der vorhergehenden Bewegungsphase des Halbbilds B0 dargestellt wird. Das gemäß dem Zeiger 15 auszulesende Halbbild ist entsprechend dem Zeitstrahl 1 im α-Raster des Hauptbilds darzustellen. Ohne weitere Steuerungsmaßnahmen würde bei der Jointline 19 beim Übergang von zum Halbbild A1 gehörenden Zeilen auf das Halbbild B0 eine Rastervertauschung vorliegen, was vom Betrachter als äußerst störend empfunden werden würde.

Es ist deshalb vorgesehen, daß für eine aus dem Halbbildspeicher ausgelesene Zeile in Abhängigkeit von ihrer Zugehörigkeit zum ersten (A0, A1,...) oder zweiten (B0, B1,...) Halbbild und in Abhängigkeit von der Zeilenrasterlage des Hauptbildes (α, β) eine Korrektur der einzublendenden Bildzeile derart vorgenommen wird, daß der Bildinhalt an die Zeilenrasterlage des Hauptbildes, an der die Zeile einzublenden ist, angepaßt wird. Hierzu wird ein Korrektursignal erzeugt, das am Ausgang des Halbbildspeichers eine Umschaltung durchführt. Gemäß einer ersten Ausführungsform werden die ersten Halbbilder A im Raster α unverändert dargestellt und die zweiten Halbbilder B im Raster β unverändert. Sofern ein einzublendendes Halbbild A, B im jeweils anderen Raster darzustellen ist, wird eine Interpolation zweier aus dem Halbbildspeicher aufeinanderfolgend ausgelesener Zeilen ausgeführt.

Nach einer zweiten Ausführungsform werden Zeilen eines Halbbilds A im Raster β unverändert dargestellt. Um eine korrekte Zeilenverkämmung mit Zeilen eines Halbbilds B, das im Raster α darzustellen ist, zu gewährleisten, müssen die Zeilen eines Halbbilds B gegenüber den Zeilen eines Halbbilds A um eine Zeile nach unten verschoben werden. Dies wird durch eine Verzögerung um eine Halbbildzeile beim Auslesen eines Halbbilds B erreicht. Sind einzublendende Zeilen eines Halbbilds A im Raster α darzustellen bzw. einzublendende Zeilen eines Halbbilds B im Raster β, so ist jeweils eine Rasterumsetzung, also eine Interpolation durchzuführen. Die Erzeugung des jeweiligen Korrektursignals in Abhängigkeit vom Hauptbildraster und von der Halbbildzugehörigkeit der Zeilen des einzublendenden Bildes ist in der Tabelle 1 dargestellt:

**Tabelle 1**

| Hauptbildraster | einzublendende Zeilen von Halbbild | Korrektur 1. Ausführung | Korrektur 2. Ausführung |
|---|---|---|---|
| α | A | - | Interpolation |
| α | B | Interpolation | Verzögerung |
| β | A | Interpolation | - |
| β | B | - | Interpolation |

Für die in der Figur 1 dargestellte Phasenlage von Hauptbild zu einzublendendem Bild ist in Tabelle 2 die Abfolge der durchzuführenden Korrekturen zwischen den Zeitpunkten 25 und 30 gezeigt. Dieser Zeitraum umfaßt die Rasterabfolge α1, α2, β1, β2.

**Tabelle 2**

| Hauptbildraster | einzublendendes Halbbild | Korrektur 1. Ausführung | Korrektur 2. Ausführung |
|---|---|---|---|
| α1 | A1 | - | Interpolation |
| | B0 | Interpolation | Verzögerung |
| α2 | A1 | - | Interpolation |
| | B0 | Interpolation | Verzögerung |
| β1 | B1 | - | Interpolation |
| | A1 | Interpolation | - |
| β2 | B1 | - | Interpolation |
| | A1 | Interpolation | - |

Die in der Tabelle beispielhaft angegebenen Korrekturen sind auch auf entsprechende andere Phasenlagen von Hauptbild zu einzublendendem Bild anwendbar. Die Abfolge der Korrekturmaßnahmen ändert sich dadurch in entsprechender Weise unter Anwendung der Tabelle 1. Die in Tabelle 1 angegebenen Korrekturvorschriften sind auch anwendbar, wenn im Hauptbild die Rasterabfolge αβαβ durchgeführt wird. Darüber hinaus gilt die Umsetzungsvorschrift nach Tabelle 1 auch für progressive Bilder, bei denen am Bildschirm Vollbilder darzustellen sind, von denen jedes abwechselnd Zeilen mit α- oder β-Rasterlage aufweist.

Die Rasterkorrektur sorgt stets für eine rasterrichtige Einblendung des einzublendenden Bildes in das Hauptbild, wobei die Jointline bestehen bleibt. Im Fall der Wiedergaberaster ααββ und αβαβ können je nach Phasenlage von einzublendendem Bild und Hauptbild, wie in Figur 1 gezeigt, höchstens zwei Jointlines abwechselnd auftreten. Im Fall eines progressiven Wiedergaberasters α+β tritt höchstens eine Jointline auf.

**Tabelle 3**

| Hauptbildraster | Speicherauslesebereich | einzublendendes Halbbild | Korrektur 1. Ausführung | Korrektur 2. Ausführung |
|---|---|---|---|---|
| α1 | X | A1 | - | - |
| | Y | B0 | Interpolation | Verzögerung |
| | Z | B0 | Verzögerung | Verzögerung |
| α1 | X | A1 | - | - |
| | Y | A1 | - | Interpolation |
| | Z | B0 | Verzögerung | Verzögerung |
| β1 | X | B1 | - | - |
| | Y | A1 | Interpolation | - |
| | Z | A1 | - | - |
| β2 | X | B1 | - | - |
| | Y | B1 | - | Interpolation |
| | Z | A1 | - | - |

Eine weitere Ausführungsform des Verfahrens mit einer anderen Vorschrift zur Erzeugung des Korrektursignals ist in Tabelle 3 am Beispiel der in Figur 1 dargestellten Phasenlage von Hauptbild und einzublendendem Bild gezeigt. Diese Ausführungsform ist anwendbar, wenn unmittelbar aufeinanderfolgend mindestens zweimal die gleichen Wiedergaberaster vorliegen, wie beispielsweise im Wiedergaberaster ααββ. Es werden die durch die Jointlines begrenzten verschiedenen Auslesebereiche des Halbbildspeichers für das einzublendende Bild ausgewertet. Wie bereits festgestellt, liegen für ein einzublendendes Halbbild zwei Jointlines 19, 20 vor, die nicht im gleichen, sondern in den aufeinanderfolgenden Auslesezyklen 15 bzw. 16 auftreten. Die jeweiligen durch die Jointlines begrenzten Adreßbereiche des Halbbildspeichers sind mit X, Y, Z bezeichnet. In den Zeitabschnitten 31, 32 ist beispielsweise nach der zweiten Ausführungsform gemäß Tabelle 2 jeweils eine Interpolation für dieselben Zeilen des einzublendenden Halbbilds durchzuführen, um die zum Halbbild A1 gehörenden Zeilen auf die Rasterlage α umzusetzen. In ähnlicher Weise ist für die erste Ausführungsform nach Tabelle 2 in den Zeitbereichen 33, 34 eine Interpolation für dieselben Zeilen des einzublendenden Halbbilds durchzuführen, um die entsprechenden zum Halbbild B0 gehörenden Zeilen auf das α-Raster umzusetzen. Bei der nach Tabelle 3 angegebenen Umsetzungsvorschrift werden in den Zeitabschnitten 31, 32 und 33, 34 keine Interpolationen durchgeführt, sondern die jeweiligen Zeilen der Halbbilder A1 bzw. B0 unverändert zur Einblendung gebracht. Gegebenenfalls ist bei der ersten Ausführungsform eine Verzögerung der Zeilen des Halbbilds B0 um eine Zeile durchzuführen, um die korrekte Zeilenverkämmung mit den Zeilen aus den Halbbildern A0 und A1, die vorher und danach im β-Raster darzustellen sind, zu gewährleisten. Dadurch wird in diesen Bereichen 31, 32 und 33, 34 die vertikale Auflösung erhöht. Zwar wird im Bereich der Jointline eine Bildzeile nicht zur Anzeige gebracht, so daß der Bildinhalt um diese Bildzeile in vertikale Richtung verschoben wird, diese Beeinträchtigung wird aber vom Betrachter kaum wahrgenommen, so daß insgesamt durch die verbesserte vertikale Auflösung eine Qualitätsverbesserung erreicht wird. In entsprechender Weise kann für die erste und zweite Ausführungsform in den Wiedergaberastern β1, β2 für die Auslesebereiche Z bzw. X eine Verbesserung der vertikalen Auflösung erreicht werden.

Zur Erkennung der Zeitbereiche 31, 32 und 33, 34 ist es zweckmäßig, den Auslesebereich X bzw. Z festzustellen. Dies wird beispielsweise dadurch erreicht, daß die Ausleseadresse mit der Adresse, an der die Jointline 19 bzw. 20 vorliegt, verglichen wird. Die jeweiligen Lagen der Jointlines 19, 20 werden wiederum dadurch festgestellt, daß die Einschreibadresse für das Halbbild Al von den Ausleseadressen für die Auslesevorgänge 15, 16 überholt wird. Die in Tabelle 3 für eine beispielhafte Phasenlage von Hauptbild zu einzublendendem Bild gezeigten Korrekturvorschriften können auf andere Phasenlagen des Wiedergaberasters ααββ übertragen werden, indem für solche Bereiche, in denen unmittelbar aufeinanderfolgend für zwei gleiche Wiedergaberaster für jeweils dieselben Zeilen des einzublendenden Bildes anstelle einer Interpolation entsprechend der Tabellen 1 und 2 ein unverändertes Einblenden entsprechend der Tabelle 3 durchgeführt wird.

Bei den beschriebenen Ausführungen des Verfahrens wurde angenommen, daß der Halbbildspeicher zeilenweise adressierbar ist. Die Rasterlagenkorrektur wird deshalb nur zeilensynchron durchgeführt. Es sind auch Halbbildspeicher verwendbar, die in Abschnitten einer Zeile, z. B. halbzeilenweise oder drittelzeilenweise usw., oder bildpunktweise adressierbar sind. Das Überschreiben von bereits gespeicherter mit neu eingelesener einzublendender Bildinformation, also das Überholen von Einschreib- und Ausleseadresse, kann hierbei innerhalb einer Zeile liegen. In diesem Fall wird das Korrektursignal innerhalb einer Zeile mit jedem neu adressierten Zeilenabschnitt bzw. Bildpunkt aktualisiert. Die Umschaltung zwischen den verschiedenen durchzuführenden Rasterkorrekturen liegt dann innerhalb der betreffenden Zeile.

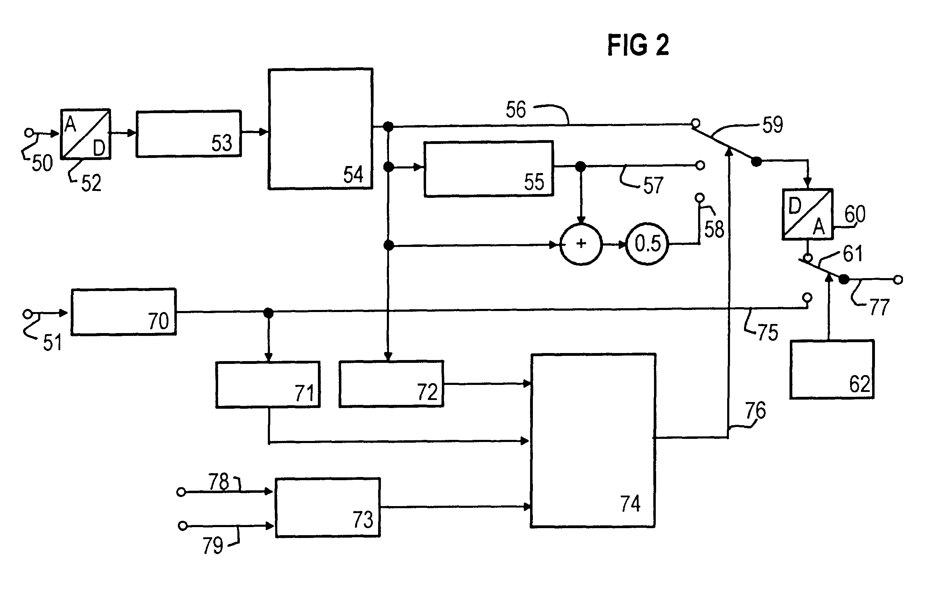

Die in der Figur 2 gezeigte Schaltungsanordnung ist zur Durchführung des oben beschriebenen Verfahrens geeignet. An einem Anschluß 51 ist ein Videosignal für das Hauptbild eingespeisbar, auf das in einer Einrichtung 70 Verfahrensschritte zur Flimmerbefreiung angewandt werden. Hierzu wird in der Einrichtung 70 die Zeilenfrequenz verdoppelt. Beispielsweise kann eine Verdopplung der Halbbildrate oder eine progressive Konversion durchgeführt werden.

An einem Anschluß 50 ist ein Videosignal für das einzublendende Bild anlegbar. Zur digitalen Verarbeitung des Bildsignals dient eine Analog-Digital-Wandlereinrichtung 52. In einer Einrichtung 53 werden die Halbbilder des einzublendenden Bildes auf die einzublendende Bildgröße dezimiert. Die dezimierten Bilder werden in einem Speicher 54 für ein einziges Halbbild zwischengespeichert. Die aus dem Halbbildspeicher 54 ausgelesenen Daten werden nach weiter unten noch zu beschreibenden Mitteln zur Rasteranpassung des einzublendenden Bildes an die momentane Rasterlage des Hauptbildes in einer Digital-Analog-Wandlereinrichtung 60 analog gewandelt und in einer Einblendeinrichtung 61 an die vorgesehene Stelle des Hauptbildes eingeblendet. Zur Steuerung der Umschaltung zwischen Hauptbild und einzublendendem Bild dient eine Einblendsteuerung 62. Am Ausgangsanschluß 77 des Umschalters ist die an einem Bildschirm darzustellende Information abgreifbar.

Zur Anpassung der Rasterlage der im Halbbildspeicher 54 zwischengespeicherten einzublendenden Bildzeilen an die jeweilige Zeilenrasterlage des Hauptbilds am Anschluß 75 ist ein Umschalter 59 vorgesehen, der zwischen drei verschiedenen Anschlüssen 56, 57, 58 umgeschaltet werden kann. Am Anschluß 56 steht die aus dem Bildspeicher 54 ausgelesene Bildzeile unmittelbar und unverändert zur Verfügung. Der Anschluß 57 ist über einen Zeilenspeicher 55 mit dem Ausgang des Halbbildspeichers 54 verbunden, so daß eine am Anschluß 57 abgreifbare Bildzeile um eine Zeile im Bild nach unten verschoben, d. h. verzögert, ist. Am Anschluß 58 ist der Mittelwert einer gerade ausgelesenen Zeile mit der unmittelbar vorhergehenden durch den Zeilenspeicher 55 verzögerten Zeile abgreifbar. Der Umschalter 59 wird durch die Korrektureinrichtung 74, an deren Ausgangsanschluß 76 ein die Schalterstellung des Umschalters 59 angebendes Korrektursignal erzeugt wird, gesteuert. Durch die Einrichtung 74, zum Beispiel eine Logikeinrichtung, werden die gemäß den Tabellen 2 und 3 angegebenen Korrekturvorschriften ausgewertet. Hierzu ist die Einrichtung 74 eingangsseitig mit folgenden weiteren Einrichtungen verbunden: einer Einrichtung 71, die die Rasterlage der am Anschluß 75 anliegenden Zeile des Hauptbildes, die zur Einblendung einer Zeile des einzublendenden Bildes vorgesehen ist, angibt; einer Einrichtung 72, die mit dem Ausgang des Halbbildspeichers 54 verbunden ist und angibt, welchem Halbbild des einzublendenden Bildes die einzublendende Bildzeile zuordenbar ist; einer Einrichtung 73, die zur Realisierung der Korrekturvorschriften nach Tabelle 3 vorgesehen ist und angibt, in welchem der Auslesebereiche X, Y oder Z sich die vom Halbbildspeicher 54 gerade ausgelesene Zeile befindet. Der Einrichtung 73 werden eingangsseitig an Anschlüssen 78, 79 die momentanen Lese- und Schreibadressen des Halbbildspeichers 54 zugeführt. Wie bereits oben in Zusammenhang mit der Tabelle 3 ausgeführt, wird in der Einrichtung 73 zur Bereichserkennung im wesentlichen ein Vergleich von Lese- und Schreibadresse durchgeführt.

Um einen Mittelwert zweier einzublendender Zeilen am Anschluß 58 abzugreifen, muß während einer ersten Zeilenperiode der Zeilenspeicher 55 beschrieben werden. Während der nächsten Zeilenperiode kann am Anschluß 58 der Mittelwert aus dieser eben zwischengespeicherten Zeile und der gerade ausgelesenen Zeile gebildet werden. Wenn beispielsweise gemäß der ersten Ausführungsform des Verfahrens nach Tabelle 1 bei einer entsprechenden Phasenlage von einzublendendem Bild und Hauptbild eine zu einem Halbbild B gehörende Zeile des einzublendenden Bildes in eine zur Rasterlage α gehörende Zeile des Hauptbildes einzublenden ist, ist eine Interpolation durchzuführen. Da zur Bildung der Interpolation die erste Zeile des Halbbilds B im Zeilenspeicher 55 zwischengespeichert werden muß, steht eine interpolierte Zeile erst mit der zweiten Zeile des α-Rasters (dritte Zeile des Vollbildes) zur Verfügung. Um eine korrekte Zeilenverkämmung mit einer nachfolgenden Interpolation für das β-Raster zu gewährleisten, steht ein aus zwei Zeilen des Halbbilds A zu interpolierender Mittelwert erst mit der zweiten Zeile des β-Rasters (vierte Zeile des Vollbildes) frühestens zur Verfügung. Dies bedeutet, sofern gewöhnliche seriell adressierbare Bildspeicher verwendet werden, daß zwei Bildzeilenspeicher im Halbbildspeicher 54 vorhanden sind, deren Bildinformation nicht zur Bildeinblendung verwendet wird.

Nach der zweiten Ausführungsform gemäß Tabelle 1, bei der eine Interpolation dann ausgeführt wird, wenn zum Halbbild A gehörende Zeilen im α-Raster und zum Halbbild B gehörende Zeile im β-Raster einzublenden sind und sonst keine Interpolation durchgeführt wird, kann eine herkömmliche Adressierungstechnik für den Halbbildspeicher verwendet werden, wobei im Vergleich zur ersten Ausführungsform der Halbbildspeicher eine Bildzeile weniger enthält.

## Patentansprüche

1. Verfahren zur Bild-im-Bild-Einblendung eines einzublendenden Bildes in ein Hauptbild mit den Merkmalen:
• das einzublendende Bild umfaßt in Zeilen aufgeteilte erste (A0, A1) und zweite (B0, B1) Halbbilder mit Zeilensprung,
• das Hauptbild, das eine im Vergleich zu den Halbbildern des einzublendenden Bildes verdoppelte Zeilenfrequenz aufweist, umfaßt Zeilen, die einer ersten und einer zweiten Zeilenrasterlage (α, β) zuordenbar sind,
• die Halbbilder des einzublenden Bildes werden in einem Speicher (54) für ein Halbbild zwischengespeichert und zur Einblendung in das Hauptbild mit verdoppelter Zeilenfrequenz ausgelesen,
• das erste Halbbild (A) des einzublendenden Bildes umfaßt den Bildinhalt der ungeradzahligen Zeilen und das zweite Halbbild (B) den Bildinhalt der geradzahligen Zeilen,
• die erste Zeilenrasterlage (α) umfaßt die ungeradzahligen Zeilen und die zweite Zeilenrasterlage (β) die geradzahligen Zeilen,
• für eine aus dem Speicher ausgelesene Zeile des einzublenden Bildes wird der Bildinhalt der Zeile in Abhängigkeit von ihrer Zugehörigkeit zum ersten oder zweiten Halbbild (A, B), an der die Zeile des einzublenden Bildes einzublenden ist, an die Zeilenrasterlage der Zeile des Hauptbildes angepaßt, indem folgende Schritte ausgeführt werden:
a) wenn die Zeile des einzublenden Bildes eine Zeile des ersten Halbbildes (A) ist und die Zeile des Hauptbildes die erste Zeilenrasterlage (α) aufweist oder eine Zeile des zweiten Halbbildes (B) ist und die Zeile des Hauptbildes die zweite Zeilenrasterlage (β) aufweist, wird die Zeile des einzublenden Bildes unverändert in die Zeile des Hauptbildes eingeblendet,
b) wenn die Zeile des einzublenden Bildes eine Zeile des ersten Halbbildes (A) ist und die Zeile des Hauptbildes die zweite Zeilenrasterlage (β) aufweist oder eine Zeile des zweiten Halbbildes (B) ist und die Zeile des Hauptbildes die erste Zeilenrasterlage (∝) aufweist, wird die Zeile des einzublenden Bildes nach einer Rasterlagenumsetzung ihres Bildinhalts auf die Zeilenrasterlagen des Hauptbildes in die Zeile des Hauptbildes eingeblendet.

2. Verfahren zur Bild-im-Bild-Einblendung eines einzublendenden Bildes in ein Hauptbild mit den Merkmalen:
• das einzublendende Bild umfaßt in Zeilen aufgeteilte erste (A0, A1) und zweite (B0, B1) Halbbilder mit Zeilensprung,
• das Hauptbild, das eine im Vergleich zu den Halbbildern des einzublendenden Bildes verdoppelte Zeilenfrequenz aufweist, umfaßt Zeilen, die einer ersten und einer zweiten Zeilenrasterlage (α, β) zuordenbar sind,
• die Halbbilder des einzublenden Bildes werden in einem Speicher (54) für ein Halbbild zwischengespeichert und zur Einblendung in das Hauptbild mit verdoppelter Zeilenfrequenz ausgelesen,
• das erste Halbbild (A) des einzublenden Bildes umfaßt den Bildinhalt der ungeradzahligen Zeilen und das zweite Halbbild (B) den Bildinhalt der geradzahligen Zeilen,
• die erste Zeilenrasterlage (α) umfaßt die ungeradzahligen Zeilen und die zweite Zeilenrasterlage (β) die geradzahligen Zeilen,
• für eine aus dem Speicher ausgelesene Zeile des einzublenden Bildes wird der Bildinhalt der Zeile in Abhängigkeit von ihrer Zugehörigkeit zum ersten oder zweiten Halbbild (A, B) und von der Zeilenrasterlage der Zeile des Hauptbildes (α, β), an der die Zeile des einzublenden Bildes einzublenden ist, an die Zeilenrasterlage der Zeile des Hauptbildes angepaßt, indem folgende Schritte ausgeführt werden:
a) wenn die Zeile des einzublenden Bildes eine Zeile des ersten Halbbildes (A) ist und die Zeile des Hauptbildes die zweite Zeilenrasterlage (β) aufweist, wird die Zeile des einzublenden Bildes unverändert in die Zeile des Hauptbildes eingeblendet,
b) wenn die Zeile des einzublendenen Bildes eine Zeile des zweiten Halbbildes (B) ist und die Zeile des Hauptbildes die erste Zeilenrasterlage (α) aufweist, wird die Zeile des einzublenden Bildes nach einer Verzögerung um die Zeitdauer einer Zeile in die Zeile des Hauptbildes eingeblendet,
c) wenn die Zeile des einzublenden Bildes eine Zeile des ersten Halbbildes (A) ist und die Zeile des Hauptbildes die erste Zeilenrasterlage (α) aufweist, oder eine Zeile des zweiten Halbbildes (B) ist und die Zeile des Hauptbildes die zweite Zeilenrasterlage (β) aufweist, wird die Zeile des einzublenden Bildes nach einer Rasterlagenumsetzung ihres Bildinhalts auf die Zeilenrasterlage des Hauptbildes in die Zeile des Hauptbildes eingeblendet.

3. Verfahren nach Anspruch 1 oder 2,
**dadurch gekennzeichnet**, daß
für das einzublendende Bild beim Auslesen aus dem Speicher für jede Zeile ein erstes Signal, das angibt, ob die Zeile dem ersten oder dem zweiten Halbbild angehört, erzeugt wird, daß für jede Zeile des Hauptbildes ein zweites Signal, das deren Zeilenrasterlage angibt, erzeugt wird und daß aus dem ersten und dem zweiten Signal ein Korrektursignal erzeugt wird, durch das die Anpassung des Bildinhalts der Zeile des einzublendenden Bildes an die Zeilenrasterlage des Hauptbildes gesteuert wird.

4. Verfahren nach einem der Ansprüche 1 bis 3,
**dadurch gekennzeichnet**, daß
zur Rasterlagenumsetzung eine Interpolation der Zeile des einzublendenden Bildes und einer darauf folgend abgespeicherten Zeile des einzublendenden Bildes durchgeführt wird.

5. Verfahren nach Anspruch 1,
**dadurch gekennzeichnet**, daß
das Hauptbild eine Folge von Halbbildern umfaßt, bei der mindestens zwei aufeinanderfolgende Halbbilder die gleiche Zeilenrasterlage (ααββ) aufweisen, daß anstelle einer Rasterlagenumsetzung für dieselben Zeilen des einzublendenden Bildes in beiden Halbbildern des Hauptbildes ein unverändertes Einblenden der Zeilen des einzublendenden Bildes in das Hauptbild durchgeführt wird.

6. Verfahren nach Anspruch 2,
**dadurch gekennzeichnet**, daß
das Hauptbild eine Folge von Halbbildern umfaßt, bei der mindestens zwei aufeinanderfolgende Halbbilder die gleiche Zeilenrasterlage (ααββ) aufweisen, daß anstelle einer Rasterlagenumsetzung für dieselben Zeilen des einzublendenden Bildes in den beiden aufeinanderfolgenden Halbbildern des Hauptbildes ein unverändertes Einblenden der Zeilen des ersten Halbbildes in das zweite Zeilenraster des Hauptbildes durchgeführt wird und daß die Zeilen des zweiten Halbbildes in das erste Zeilenraster des Hauptbildes nach einer Verzögerung um die Dauer einer Zeile eingeblendet werden.

7. Schaltungsanordnung zur Durchführung des Verfahrens nach einem der Ansprüche 1 bis 6,
**gekennzeichnet durch**
- einen Speicher (54) zur Speicherung eines Halbbildes des einzublendenden Bildes,
- ein Mittel zur Halbbilderkennung(72), das mit dem Speicher (54) ausgangsseitig verbunden ist,
- ein Mittel zur Zeilenrastererkennung (71) für das Hauptbild,
- eine Auswerteeinrichtung (74), der je ein vom Mittel zur Halbbilderkennung (72) und vom Mittel zur Zeilenrastererkennung (71) erzeugtes Signal zugeführt wird, und durch die in Abhängigkeit von den Signalen ein Korrektursignal erzeugt,
- eine vom Korrektursignal gesteuerte Umschalteinrichtung (59), die mit einem Ausgang des Speichers (54) unmittelbar, über einen Zeilenspeicher (55) oder über eine Interpolationseinrichtung verbindbar ist,
- Mittel zum Einblenden (61, 62) von aus dem Speicher (54) ausgelesenen Zeilen des einzublendenden Bildes in Abschnitte von Zeilen des Hauptbildes.

8. Schaltungsanordnung nach Anspruch 7,
**dadurch gekennzeichnet**, daß
durch die Interpolationseinrichtung ein Mittelwert aus einer gerade aus dem Speicher ausgelesenen Zeile und einer um die Zeitdauer einer Zeile verzögerten Zeile gebildet wird.

9. Schaltungsanordnung nach Anspruch 7 oder 8,
**dadurch gekennzeichnet**, daß
Mittel zum Feststellen des Überholens (73) von Schreib- und Leseadresse des Speichers vorgesehen sind, die ausgangsseitig mit der Auswerteeinrichtung verbunden sind.

## Claims

1. Method for the picture-in-picture insertion of a picture to be inserted into a main picture, having the features:
• the picture to be inserted comprises first fields (A0, A1) and second fields (B0, B1) subdivided into lines with line interlacing,
• the main picture, which has a line frequency twice as high as the fields in the picture to be inserted, comprises lines which can be assigned to a first and a second line-scan position (α, β),
• the fields of the picture to be inserted are buffered in a memory (54) for a field and, in order to be inserted into the main picture, are read out at twice the line frequency,
• the first field (A) of the picture to be inserted comprises the picture content of the odd-numbered lines, and the second field (B) comprises the picture content of the even-numbered lines,
• the first line-scan position (α) comprises the odd-numbered lines, and the second line-scan position (β) comprises the even-numbered lines,
• for a line which belongs to the picture to be inserted and which is read out of the memory, the picture content of the line is matched, depending on whether it belongs to the first or second field (A, B) at which the line of the picture to be inserted is to be inserted, to the line-scan position of the line of the main picture by the following steps being carried out:
a) if the line of the picture to be inserted is a line of the first field (A), and the line of the main picture is at the first line-scan position (α), or if the line of the picture to be inserted is a line of the second field (B) and the line of the main picture is at the second line-scan position (β), the line of the picture to be inserted is inserted unchanged into the line of the main picture,
b) if the line of the picture to be inserted is a line of the first field (A) and the line of the main picture is at the second line-scan position (β), or if the line of the picture to be inserted is a line of the second field (B) and the line of the main picture is at the first line-scan position (α), the line of the picture to be inserted is inserted into the line of the main picture after the scan position of its picture content has been converted to the line-scan positions of the main picture.

2. Method for the picture-in-picture insertion of a picture to be inserted into a main picture, having the features:
• the picture to be inserted comprises first fields (A0, A1) and second fields (B0, B1) subdivided into lines with line interlacing,
• the main picture, which has a line frequency twice as high as the fields in the picture to be inserted, comprises lines which can be assigned to a first and a second line-scan position (α, β),
• the fields of the picture to be inserted are buffered in a memory (54) for a field and, in order to be 35 inserted into the main picture, are read out at twice the line frequency,
• the first field (A) of the picture to be inserted comprises the picture content of the odd-numbered lines, and the second field (B) comprises the picture content of the even-numbered lines,
• the first line-scan position (α) comprises the odd-numbered lines, and the second line-scan position (β) comprises the even-numbered lines,
• for a line which belongs to the picture to be inserted and which is read out of the memory, the picture content of the line is matched, depending on whether it depends to the first or second field (A, B) and on the line-scan position of the line of the main picture (α, β) at which the line of the picture to be inserted is to be inserted, to the line-scan position of the line of the main picture by the following steps being carried out:
a) if the line of the picture to be inserted is a line of the first field (A) and the line of the main picture is at the second line-scan position (β), the line of the picture to be inserted is inserted unchanged into the line of the main picture,
b) if the line of the picture to be inserted is a line of the second field (B) and the line of the main picture is at the first line-scan position (α), the line of the picture to be inserted is inserted into the line of the main picture after a delay of the duration of one line,
c) if the line of the picture to be inserted is a line of the first field (A) and the line of the main picture is at the first line-scan position (α), or if the line of the picture to be inserted is a line of the second field (B) and the line of the main picture is at the second line-scan position (β), the line of the picture to be inserted is inserted into the line of the main picture after the scan position of its picture content has been converted to the line-scan position of the main picture.

3. Method according to Claim 1 or 2, characterized in that for the picture to be inserted, when it is read out to the memory, a first signal is generated for each line, the signal indicating whether the line belongs to the first or the second field, in that for each line of the main picture a second signal is generated which indicates its line-scan position, and in that a correction signal is generated for the first and second signals, this signal being used to control the matching of the picture content of the line of the picture to be inserted to the line-scan position of the main picture.

4. Method according to one of Claims 1 to 3, characterized in that in order to convert the scan position, an interpolation is carried out between the line of the picture to be inserted and a subsequent stored line of the picture to be inserted.

5. Method according to Claim 1, characterized in that the main picture comprises a sequence of fields in which at least two successive fields have the same line-scan position (ααββ), in that instead of scan-position conversion being carried out for these same lines of the picture to be inserted, the lines of the picture to be inserted are inserted unchanged into the main picture in both fields of the main picture.

6. Method according to Claim 2, characterized in that the main picture comprises a sequence of fields in which at least two successive fields have the same line-scan position (ααββ), in that instead of scan-position conversion being carried out for these same lines of the picture to be inserted, the lines of the first field are inserted unchanged into the second line scan of the main picture in the two successive fields of the main picture, and in that the lines of the second field are inserted into the first line scan of the main picture after a delay of the duration of one line.

7. Circuit arrangement for implementing a method according to one of Claims 1 to 6, characterized by
- a memory (54) for storing one field of the picture to be inserted,
- a means for field detection (72), which is connected to the output of memory (54),
- a means for line-scan detection (71) for the main picture,
- an evaluation device (74), to which a signal generated by the means for field detection (72) and by the means for line-scan detection (71) are respectively fed, and by means of which a correction signal is generated as a function of the signals,
- a changeover device (59), controlled by the correction signal, which can be connected to the output of the memory (54) directly, via a line store (55) or via an interpolation device,
- means for inserting (61, 62) lines of the picture to be inserted, which are read out of the memory (54), into sections of lines of the main picture.

8. Circuit arrangement according to Claim 7, characterized in that the interpolation device is used to form a mean value of a line just read out of the memory and a line delayed by the duration of one line.

9. Circuit arrangement according to Claim 7 or 8, characterized in that means are provided in order to define the fetching (73) of write and read addresses of the memory, the output of these means being connected to the evaluation device.

## Revendications

1. Procédé d'insertion image-dans-image destiné à l'insertion d'une image à insérer dans une image principale et ayant les caractéristiques suivantes :
• l'image à insérer comprend une première demi-image (A0, A1) et une deuxième demi-image (B0, B1) divisées en lignes et avec entrelacement de lignes,
• l'image principale, qui a une fréquence de ligne double par rapport aux demi-images de l'image à insérer, comprend des lignes qui peuvent être associées à une première position de trame de ligne (α) et à une deuxième position de trame de ligne (β),
• les demi-images de l'image à insérer sont mémorisées temporairement dans une mémoire (54) pour une demi-image et sont lues avec une fréquence de ligne double pour l'insertion dans l'image principale,
• la première demi-image (A) de l'image à insérer comprend le contenu d'image des lignes impaires et la deuxième demi-image (B) comprend le contenu d'image des lignes paires,
• la première position de trame de ligne (α) comprend les lignes impaires et la deuxième position de trame de ligne (β) comprend les lignes paires,
• pour une ligne de l'image à insérer lue dans la mémoire, le contenu d'image de la ligne est adapté à la position de trame de la ligne de l'image principale, en fonction de son appartenance à la première demi-image (A) ou à la deuxième demi-image (B), par la mise en oeuvre des étapes suivantes :
a) si la ligne de l'image à insérer est une ligne de la première demi-image (A) et si la ligne de l'image principale a la première position de trame de ligne (α), ou si la ligne de l'image à insérer est une ligne de la deuxième demi-image (B) et si la ligne de l'image principale a la deuxième position de trame de ligne (β), la ligne de l'image à insérer est insérée sans changement dans la ligne de l'image principale,
b) si la ligne de l'image à insérer est une ligne de la première demi-image (A) et si la ligne de l'image principale a la deuxième position de trame de ligne (β), ou si la ligne de l'image à insérer est une ligne de la deuxième demi-image (B) et si la ligne de l'image principale a la première position de trame de ligne (α), la ligne de l'image à insérer est insérée dans la ligne de l'image principale après une conversion de position de trame de son contenu d'image sur les positions de trame de ligne de l'image principale.

2. Procédé d'insertion image-dans-image destiné à l'insertion d'une image à insérer dans une image principale et ayant les caractéristiques suivantes :
• l'image à insérer comprend une première demi-image (A0, A1) et une deuxième demi-image (B0, B1) divisées en lignes et avec entrelacement de lignes,
• l'image principale, qui a une fréquence de ligne double par rapport aux demi-images de l'image à insérer, comprend des lignes qui peuvent être associées à une première position de trame de ligne (α) et à une deuxième position de trame de ligne (β),
• les demi-images de l'image à insérer sont mémorisées temporairement dans une mémoire (54) pour une demi-image et sont lues avec une fréquence de ligne double pour l'insertion dans l'image principale,
• la première demi-image (A) de l'image à insérer comprend le contenu d'image des lignes impaires et la deuxième demi-image (B) comprend le contenu d'image des lignes paires,
• la première position de trame de ligne (α) comprend les lignes impaires et la deuxième position de trame de ligne (β) comprend les lignes paires,
• pour une ligne de l'image à insérer lue dans la mémoire, le contenu d'image de la ligne est adapté à la position de trame de la ligne de l'image principale, en fonction de son appartenance à la première demi-image (A) ou à la deuxième demi-image (B) et en fonction de la position de trame de la ligne de l'image principale (α, β) à laquelle la ligne de l'image à insérer est à insérer, par la mise en oeuvre des étapes suivantes :
a) si la ligne de l'image à insérer est une ligne de la première demi-image (A) et si la ligne de l'image principale a la deuxième position de trame de ligne (β), la ligne de l'image à insérer est insérée sans changement dans la ligne de l'image principale,
b) si la ligne de l'image à insérer est une ligne de la deuxième demi-image (B) et si la ligne de l'image principale a la première position de trame de ligne (α), la ligne de l'image à insérer est insérée dans la ligne de l'image principale après un retardement de la durée d'une ligne,
c) si la ligne de l'image à insérer est une ligne de la première demi-image (A) et si la ligne de l'image principale a la première position de trame de ligne (α), ou si la ligne de l'image à insérer est une ligne de la deuxième demi-image (B) et si la ligne de l'image principale a la deuxième position de trame de ligne (β), la ligne de l'image à insérer est insérée dans la ligne de l'image principale après une conversion de position de trame de son contenu d'image sur la position de trame de ligne de l'image principale.

3. Procédé selon la revendication 1 ou 2, caractérisé par le fait qu'on produit pour l'image à insérer, lors de la lecture dans la mémoire, pour chaque ligne un premier signal qui indique si la ligne appartient à la première ou à la deuxième demi-image, qu'on produit pour chaque ligne de l'image principale un deuxième signal qui indique sa position de trame de ligne et qu'on produit à partir du premier signal et du deuxième signal un signal de correction qui commande l'adaptation du contenu d'image de la ligne de l'image à insérer à la position de trame de ligne de l'image principale.

4. Procédé selon l'une des revendications 1 à 3, caractérisé par le fait que, pour la conversion de position de trame, on effectue une interpolation de la ligne de l'image à insérer et d'une ligne, mémorisée juste après, de l'image à insérer.

5. Procédé selon la revendication 1, caractérisé par le fait que l'image principale comprend une séquence de demi-images selon laquelle au moins deux demi-images successives ont la même position de trame de ligne (ααββ) et qu'on effectue au lieu d'une conversion de position de trame pour les mêmes lignes de l'image à insérer dans deux demi-images de l'image principale une insertion sans changement des lignes de l'image à insérer dans l'image principale.

6. Procédé selon la revendication 2, caractérisé par le fait que l'image principale comprend une succession de demi-images selon laquelle au moins deux demi-images successives ont la même position de trame de ligne (ααββ), qu'on effectue au lieu d'une conversion de position de trame pour les mêmes lignes de l'image à insérer dans les deux demi-images successives de l'image principale une insertion sans changement des lignes de la première demi-image dans la deuxième trame de ligne de l'image principale et que l'on insère les lignes de la deuxième demi-image dans la première trame de ligne de l'image principale après un retard de la durée d'une ligne.

7. Circuit pour la mise en oeuvre du procédé selon l'une des revendications 1 à 6,
caractérisé par :
- une mémoire (54) pour la mémorisation d'une demi-image de l'image à insérer,
- un moyen pour la reconnaissance de demi-image (72) qui est relié à la mémoire (54) côté sortie,
- un moyen pour la reconnaissance de trame de ligne (71) pour l'image principale,
- un dispositif d'évaluation (74) auquel un signal produit par le moyen pour la reconnaissance de demi-image (72) et un signal produit par le moyen pour la reconnaissance de trame de ligne (71) sont envoyés et par lequel un signal de correction est produit en fonction des signaux reçus,
- un dispositif de commutation (59) qui est commandé par le signal de correction et qui peut être relié à une sortie de la mémoire (54) directement ou par l'intermédiaire d'une mémoire de ligne (55) ou par l'intermédiaire d'un dispositif d'interpolation,
- des moyens pour l'insertion (61, 62) de lignes de l'image à insérer lues dans la mémoire (54) dans des tronçons de lignes de l'image principale.

8. Circuit selon la revendication 7, caractérisé par le fait que le dispositif d'interpolation forme une valeur moyenne à partir d'une ligne qui vient juste d'être lue dans la mémoire et d'une ligne retardée de la durée d'une ligne.

9. Circuit selon la revendication 7 ou 8, caractérisé par le fait qu'il est prévu des moyens pour la détermination du dépassement (73) des adresses d'écriture et de lecture de la mémoire, lesquels moyens sont reliés en sortie au dispositif d'évaluation.
